# EUROPEAN PATENT SPECIFICATION

(11) **EP 3 099 729 B1**
(45) Date of publication and mention of the grant of the patent: **06.06.2018**
(21) Application number: 15706690.3
(22) Date of filing: 28.01.2015
(51) Int. Cl.: C08G 69/36

(54) **THREE-COMPONENT COPOLYMERS HAVING HIGH TRANSPARENCY AND LOW GAS PERMEABILITY AND PROCESS FOR THE PRODUCTION THEREOF**
DREIKOMPONENTIGE COPOLYMERE MIT HOHER TRANSPARENZ UND NIEDRIGER GASDURCHLÄSSIGKEIT UND VERFAHREN ZUR HERSTELLUNG DAVON
COPOLYMÈRES À TROIS COMPOSANTS AYANT UNE TRANSPARENCE ÉLEVÉE ET UNE PERMÉABILITÉ AUX GAZ FAIBLE ET SON PROCÉDÉ DE PRODUCTION

(30) Priority: 28.01.2014 IT MI20140110
(43) Date of publication of application: 07.12.2016
(73) Proprietor: Radicifil S.p.A., 24121 Bergamo (IT)
(72) Inventor: GRANATI, Ivan, 24026 Leffe (IT); VISCIGLIO, Andrea, 24026 Leffe (IT)
(74) Representative: Palladino, Saverio Massimo
(86) International application number: PCT/EP2015/051726
(87) International publication number: WO 2015/114017

(56) References cited:
- EP-A2- 0 816 538
- US-A- 5 645 945
- US-A- 5 723 569
- US-A1- 2007 154 827

## Description

### Field of the invention

The present invention relates to a three-component polyamide copolymer characterized by high transparency, low gas permeability, and a melting point lower than polyamide 6; the invention further relates to the process for the production of said copolymer.

### Prior art

Polyamides and copolyamides are synthetic polymers widely used for different applications, in particular in the form of fibers, for the production of fabrics or flooring, car mats, air bags, tires, ropes and cables, as well as in the form of molded parts; another use is in polymeric multilayer sheets used in the packaging field, for example of food, in which one or more polyamide sheets are coupled with layers or sheets of other polymers, for example polyolefins, in particular polyethylene or polypropylene, or EVOH, an ethylene-vinyl alcohol copolymer.

A polyamide widely used is the one indicated in the field with the acronym PA 6 or with the name of use nylon 6, obtained from caprolactam by breakage of the amide bond in the molecule resulting in the opening of the ring, and polymerization by reaction of the two -COOH and -NH₂ active groups thus formed with a -NH₂ group and a -COOH group of another equal molecule, respectively.

The main features of nylon 6 are excellent wear resistance and high elastic recovery (also common to other polyamides), and a melting point of about 220 °C (typical of this specific polyamide).

Another widely used polyamide is the so-called PA 66, obtained by polymerization of adipic acid and hexamethylene diamine; this polyamide has a melting point higher than PA 6, equal to about 255-260 °C, and a greater mechanical resistance.

In order to modify the properties of nylon 6, it is known to form copolymers by adding during the polymerization step, monomers of polyamides other than caprolactam in different amounts.

A class of widespread copolyamides is bicomponent polyamides formed by 80% of PA 6 and 20% of PA 66 (percentages by weight); these polyamides are indicated with the acronym PA 6/66 and are characterized by a more amorphous structure, greater transparency and lower crystallinity than PA 6 and PA 66.

Other copolyamides are known from the patent literature.

Patent FR 2,195,647 describes the production of copolyamides in a two-step process, wherein in a first step one or more diamines are reacted with one or more lactams, and in a second step the product obtained from the first step is reacted with one or more dicarboxylic acids; this document does not mention any particular properties or uses of the copolyamides thus obtained.

Patent US 4,102,871 discloses the production of copolyamides obtained from lactams and salts among a diamine and at least two different dicarboxylic acids, wherein the diamine comprises at least one secondary amino group; in particular, these copolyamides are intended to be used as hot-melt adhesives.

Patent US 5,310,860 describes a process for the production of a wide variety of copolyamides consisting of in a two-step reaction, wherein in the first step 10 to 90% by weight of all diamine is reacted with a lactam, or with an equivalent stoichiometric amount of a mixture of dicarboxylic, aliphatic and aromatic acids; and in the second step, the remaining amount of diamine is reacted with the product from the first step. The copolyamides thus obtained present very variable properties; for example, they can be semicrystalline or amorphous, or have high or low glass transition temperature (Tg), etc.

Patent US 5,698,660 describes block copolyamides, comprising 75% to 99.5% by weight of a linear polyamide and 0.5 to 25% of a comonomer; these copolyamides are optimized for production by melt-spinning of filaments with high modulus of elasticity.

Patent application DE 4438546 A1 describes a polyolefin-copolyamide multilayer film suitable for packaging, wherein the copolyamide is a bicomponent copolymer produced by polymerization of caprolactam in a quantity ranging from 90 to 98% by weight, while the remaining 2-10% consists of monomers formed by the reaction between diamines and dicarboxylic acids.

Patent US 5,723,569 in turn discloses bicomponent copolyamides obtained by polymerization of a lactam with a salt consisting of a dicarboxylic acid and a diamine selected among a wide range of monomers; the object of this document is to obtain polyamides with high transparency.

Patent US 6,297,345 B1 describes copolyamides obtained by condensing a lactam (or an amino acid), a dicarboxylic acid and a branched, linear, or cyclic diamine, which are charged all together into the condensing reactor. The copolyamides thus obtained exhibit improved biaxial stretching properties.

US patent application 2012/0245282 A1 describes the production of copolyamides formed by condensing at least three monomers, characterized by high fluidity when melted, with the aim of increasing filling speed and quality of molds for the production of parts formed by injection.

Finally, patent application WO 2011/134883 A2 describes copolyamides obtained by condensing a lactam, a diamine and a dicarboxylic acid, wherein the monomer units derived from the lactam form from 2.5 to 25% by weight of the final polymer. The document does not mention any particular property or use of these copolyamides.

The object of the present invention is to provide a copolyamide which has a set of properties different from the polyamides or copolyamides of the prior art, in particular high transparency, a reduced melting point compared to polyamide PA 6 with consequent improved thermal bonding, and a reduced gas permeability compared to the commercially available polyamides and copolyamides, and better mechanical features than the standard copolyamides 80/20.

### Summary of the Invention

This object is achieved according to the present invention which, in a first aspect thereof, relates to a copolyamide obtained from:
- caprolactam in an amount between 65 and 92.5%;
- salt of adipic acid-hexamethylene diamine in an amount between 5 and 20%; and
- salt of isophthalic acid-isophorone diamine in an amount between 2 and 15%.

All percentages given above are by weight; similarly, all amounts and concentrations given as percentage in the following description, examples and claims, are by weight, unless otherwise indicated.

The copolymer of the invention is of "random" type, in which the units derived from caprolactam, adipic acid-hexamethylene diamine, and isophthalic acid-isophorone diamine, are statistically distributed in the polyamide chain; in addition, due to the polymer mode of production, the final chain can include, though in smaller amounts, lengths in which a unit derived from adipic acid is linked to one derived from isophorone diamine, or a unit derived from isophthalic acid is linked to one derived from hexamethylene diamine.

In a second aspect thereof, the invention relates to the process for the production of the copolyamide described above, which comprises the steps of:
- preparing an aqueous solution of caprolactam operating under a stream of an inert gas;
- preparing separate aqueous solutions of salt of adipic acid and hexamethylene diamine, and of salt of isophthalic acid and isophorone diamine, operating either under an inert gas or in air and modifying the atmosphere to inert gas inside a transfer container or homogenizer where said solutions are loaded;
- feeding, one at a time, said aqueous solutions under inert gas into an autoclave containing an inert gas atmosphere;
- pressurizing the autoclave at a pressure of about 10 bar, by increasing the temperature of the mixture of said aqueous solutions to a value between 210-220 °C;
- increasing the temperature of said mixture up to about 225 °C, keeping the pressure at about 10.5 bar;
- decreasing the pressure in the autoclave to a value of about 1 bar, while maintaining the temperature to a value between 225 and 230 °C;
- further decreasing the pressure to a value below 0.4 bar and raising the temperature to a value higher than 230 °C;
- extracting from the autoclave the copolyamide thus produced.

The copolymer produced in the steps described above is then discharged from the autoclave; generally, to improve discharge, the pressure inside the autoclave is raised again up to 3-4 bar with an inert gas.

In the present description, the terms "autoclave" and "polymerization reactor" are used as synonyms.

### Brief description of the figures

- Figure 1 shows the flow curve obtained on a polyamide of the invention by the combination of results with rotational rheometer (η* as a function of ω) with those obtained with capillary rheometer (η as a function of γ) at 240 °C;
- Figure 2 shows a curve similar to that in Figure 1, measured at 260 °C.

### Detailed description of the invention

The copolyamide of the invention is obtained from the polymerization of three starting components, caprolactam, the salt of adipic acid-hexamethylene diamine and the salt of isophthalic acid-isophorone diamine. As said, it is a "random" copolymer, in which the units derived from caprolactam, adipic acid, isophthalic acid, hexamethylene diamine and isophorone diamine are randomly distributed.

Caprolactam is a commercial product easy to find.

The salt of adipic acid-hexamethylene diamine (also known in the industry as "AH salt", a definition that will be adopted in the rest of the description) and the salt of isophthalic acid-isophorone diamine (indicated below as "IPD-IPA salt") are used in the form of aqueous solutions at a concentration of about 50%. These solutions are prepared starting from the respective diacids and diamines (commercially available) under conditions of temperature and pressure not sufficient to cause the condensation, and thus the polymerization, thereof; under these mild conditions, only the salification occurs due to the transfer of protons by the carboxylic groups of the diacids to the amino groups of the diamines.

In detail, the AH salt solution is prepared by adding a stoichiometric amount of dry adipic acid to an aqueous solution of hexamethylene diamine, checking the achievement of the correct stoichiometric ratio of the two components by the measurement of the pH of the solution, which must be in the range of 7.4 to 7.7; a tight control of the acid-diamine balance is important to allow a control of the final molecular weight of the polymer. If necessary, the AH salt can be purified from any residues using solutions of adipic acid and hexamethylene diamine in methanol; in these solutions the salt, slightly soluble, precipitates forming white crystals, while the impurities remain in solution. Moreover, the solution of the AH salt can be decolorized using activated carbon.

The preparation of the IPD/IPA salt solution takes place in a heated reactor, using the following amounts of the starting components: 56% distilled water; 22.57% isophorone diamine; 21.43% isophthalic acid.

Distilled water is charged in the reactor, to which isophorone diamine powder is slowly added, leaving the solution under stirring for about 10-15 minutes. Thereafter, the isophthalic acid is charged, slowly and under stirring, over about an hour, checking that the product goes into solution. At the end of the addition of the acid, the solution is left under stirring for 30 minutes and the pH is checked, which must be between 6.8 and 7.2; the pH reading must be carried out at a temperature below 40 °C. If the pH is not between 6.8 and 7.2, it must be brought in the indicated range by adding the diacid or the diamine, depending on whether the pH is higher or lower than said range.

The preferred composition of the copolymer of the invention is obtained starting from the following amounts of reagents:
- caprolactam 80.5%;
- AH salt 14.5%;
- IPD/IPA salt 5%.

The three-component copolymer of the invention has the following main physical features:
- a melting point of about 200 °C, about 20 °C lower than that of the reference polymer PA 6;
- an oxygen permeability, P, measured according to standard ASTM D1434, less than or equal to 0.12 cm³•cm/m²•24h•bar, less than that of similar copolyamides available on the market;
- a transparency value, measured as a percentage of transmittance according to standard ASTM D1003, of about 93.1 ± 0.1, comparable to that of the commercially available polyamides of highest transparency.

The low melting point is a useful feature both from the point of view of applications on coextruded films, and with regard to operating temperatures of the extruders in monofilament and technopolymer applications in general, also allowing an energy saving due to the use of lower temperatures in all the processes where the copolymers of the invention are used, as well as lower efforts in generating the necessary screw turns of the extruders.

In the second aspect thereof, the invention relates to the process for the production of the copolymer described above.

In the first operation of the process, a homogenizer tank is charged with a 80% aqueous solution of caprolactam under a stream of inert gas (e.g., nitrogen); then an aqueous solution at 4% of H₃PO₄ is added, in an amount such that this acid constitutes about 0.011-0.012% of the total charge, then it is added an antifoam, typically of the silicone type, in amounts of about 0.006% on the total charge; the order of addition of H₃PO₄ and of the antifoam agent may be reversed. The mixture is left under stirring at about 90 °C for the time necessary for the charge into the polymerization reactor, generally approximately 10 minutes.

An AH salt solution is charged into a transfer container, that may be a dedicated container or the homogenizer mentioned above, after the solution of caprolactam has been discharged to the reactor; the amount of solution is such that the caprolactam/AH salt ratio falls within the limits given above. The solution is kept under gentle stirring, to avoid partial precipitation of the salt.

Finally, the procedure carried out with the AH salt solution is repeated with the solution of IPD/IPA salt, by charging such an amount thereof in the transfer container or homogenizer that the weight ratios of caprolactam/AH salt/IPD-IPA salt fall within the limits given above.

Before their loading into the autoclave, the three solutions mentioned above must be kept under inert atmosphere, in order not to introduce oxidants in the reacting mixture (apart, of course, from traces always present in industrial processes as unavoidable impurities), which could degrade the resulting polymer. The caprolactam solution, as said above, is prepared inside the homogenizer under inert gas. The AH and IPD/IPA solutions may be prepared under inert gas as well; alternatively, these solutions may be prepared in air, changing the overlying atmosphere to inert gas inside the transfer container or the homogenizer.

The transfer container in which the AH salt and IPD/IPA salt solutions mentioned above are loaded and maintained under agitation is preferably the same homogenizer in which the caprolactam solution is prepared; this arrangement is convenient because it simplifies the construction of the production plant. Operating with this arrangement, the three solutions are separately (and subsequently) prepared inside or loaded into the homogenizer, and from this, they are discharged into the polymerization reactor one at a time.

The transfer of the solutions from the transfer container or the homogenizer to the polymerization reactor can be carried out by means of pumps or even simply thanks to gravity, disposing the autoclave beneath or anyway at a lower height with respect to the homogenizer. Alternatively, the transfer can be caused by different pressure values inside the two containers, keeping the pressure in the transfer container or homogenizer at a higher value compared to the pressure inside the autoclave; as an example, the autoclave can be kept at atmospheric pressure while the pressure in the homogenizer is brought to a value of 1.5 bar. The two measures can be adopted simultaneously, to further facilitate the transfer into the autoclave in case this takes place thanks to gravity.

To the final solution thus obtained, containing caprolactam, AH salt and IPD/IPA salt, it is possible to add water to adjust the overall viscosity of the charge and favor the stirring thereof.

The autoclave is generally preconditioned by circulating an oil in its heating jacket at a temperature of about 260 °C; the mixture of reagents described above has an inlet temperature in the autoclave of about 100-110 °C, but is rapidly heated to the temperatures necessary for the reaction.

Then, the actual polymerization begins, in an inert gas atmosphere, typically nitrogen. The polymerization is carried out according to the steps known in the field of pressurization, evaporation, decompression and vacuum; all the polymerization steps take place under stirring.

In the pressurization step, after the hermetic sealing of the autoclave, the temperature of the reaction mixture increases, reaching at the end of this step about 210-220 °C; in this step, evaporation of water of the solution and the opening of the caprolactam ring take place, with the beginning of the polyaddition reactions between the aminocaproic acid and the lactam ring and some polycondensation reactions between the acid and the amine groups of the components loaded in the autoclave; the evaporation of the water initially present in the solutions, and the formation of additional water as a consequence of the condensation reactions, leads to the increase of the internal pressure up to values higher than 10 bar (for example, about 10.5 bar). The autoclave pressure keeps the water dissolved in the reagent mixture, allowing the opening of the caprolactam ring and preventing the salts from precipitating; the mixture is kept under stirring in order to ensure the greatest possible homogeneity. This step has a total duration of between some tens of minutes to one hour.

In the next step, of evaporation, the temperature of the reactant mixture is increased to values of about 225 °C, and most of the water in solution evaporates; the pressure in the system is kept at about 10.5 bar. In this step, along with water vapor, also small amounts of caprolactam and diamines are released, which are recovered. In this step, which has a duration of between about 15-30 minutes, the actual polymerization reactions begin, that is, the polyaddition of the caprolactam and partly the polycondensation.

The decompression step follows, the pressure is slowly brought from 10.5 bar to a value less than about 1 bar, through a vent valve of the autoclave, again eliminating water vapor. The temperature is kept between 225 °C and 230 °C. In this step, when the pressure is in the range between about 2 and 2.5 bar and the temperature is kept between 225 °C and 230 °C, the polycondensation and transamidation reactions become preponderant. This step, during which the polymerization reactions come almost to completion, has a duration of between one hour and two hours. The polymerization occurred is revealed by an increase in the measured stress of the stirrer caused by the increase in the viscosity and molecular weight of the polymer, from values close to 5% of the previous steps, to values between about 35 and 50% of the force applied by the stirrer, measured as absorption in Ampere of the motor compared to the theoretical maximum.

The subsequent vacuum step, lasting between one and two hours, takes place at pressure values lower than 0.4 bars and temperatures of the reaction mixture higher than 230 °C, keeping under control the stirrer stress. In this step, the amount of water in the system is further reduced, thus shifting the polycondensation equilibrium towards the formation of further amide bonds. Transamidation reactions also occur between the polymer chains already formed; with the increase of the molecular weight of the polymer, also the viscosity of the reaction mass increases; accordingly, by controlling the viscosity through the measurement of the stirrer stress it is possible to decide when to stop the reaction, obtaining a polymer of desired molecular weight. The actual value of stirrer stress at which to stop the reaction depends on the specific geometry and size of the autoclave and stirrer: however, this value can be determined for each specific apparatus by means of a few indicative tests, as known to the skilled technician.

In addition to completing the polymerization, at this stage the residual water solubilized in the polymer and not eliminated in the previous steps, as well as additional condensation water, are eliminated.

The polymer is then discharged from the autoclave by means of a centrifugal pump, and forced into a die; the extruded thus produced (in the industry also referred to commonly as "spaghetti") is cooled in water and sent to the cut, with which the cylindrical granules are obtained which are the form in which the product is marketed; this step lasts about one hour.

The raw polymer thus obtained is preferably washed with lactam water and finally with distilled water to remove unreacted monomers and oligomers; all the washing waters are recovered, re-concentrated and re-used; the granules are subsequently dried in an inert atmosphere, generally nitrogen.

The relative viscosity, Vr, of the final copolymer has values of about 3.8. Relative viscosity is a typical parameter used for the characterization of polymers: it is determined by measuring the time of fall of a solution consisting of 1g of polymer in 1 dL of 96% H₂SO₄ in a Ubbelhode capillary at 20 °C and dividing the value thus obtained by the fall time of the solvent H₂SO₄ in the same conditions.

The timing of the process of the invention are longer than the typical ones required by the production of polyamide 6; the evaporation and decompression steps require more time and are slower because of different pressures involved. This measure is necessary to prevent excessive losses of diamines during the pressurization and evaporation steps.

The invention will be further described by the following examples.

### Example 1

Production of a random three-component copolymer according to the invention in the form of a film.

Following the production procedures reported in the above description, a three-component copolymer with the following amounts of starting components is produced:
- caprolactam 80.5%;
- AH salt 14.5%;
- IPD/IPA salt 5%.

After the pre-mixing of the components, these are reacted in the autoclave with the conditions shown in Table 1:

**Table 1**

| Step | Pressure (bar) | Mixture or polymer T (°C) | Heating fluid T(°C) | Time (min) | Stirring strength (%) |
|---|---|---|---|---|---|
| Autoclave charge | 0.46 | 110 | 270 | 11 | 0 |
| Pressurization | 0.5 to 10.5 | 210 | 298 | 50 | 10 |
| Evaporation | 10.63 | 225 | 298 | 33 | 15 |
| Decompression | 10.5 to 0.5 | 230 | 280 | 93 | 30 |
| Vacuum | 0.3 | 240 | 280 | 72 | 37-38 |
| Discharge | 0.17 | 240 | 270 | 88 | 0 |

The polymer thus obtained, after washing and drying, is processed in a pilot plant for the production of bubble films, having the constructional and operational features shown in Table 2:

**Table 2**

| | |
|---|---|
| Extruders GIMAC | W/D = 24, D_{screw} = 12 mm |
| Coextrusion head TEACH-LINE | 3-Layer Blow Film Die Type RWT 25 |
| Collection system TEACH-LINE | Film Blowing Line Type BL 50 |
| Extrusion temperatures (°C) | 245 - 235 - 235 |
| Extrusion speed (rpm) | 55 |
| Collection speed (m/min) | 3 |

The film thus produced has a thickness of 37 ± 3 µm.

### Example 2

A series of characterizations is carried out on the film produced in Example 1 to measure the mechanical, thermal, optical, gas barrier and rheological properties, as detailed below.

### Mechanical properties

Tensile strength tests are carried out on the film, both in the drawing machine direction (MD) and in the drawing transverse direction (TD), according to standard ASTM D882-91, obtaining the results shown in Table 3:

**Table 3**

| **Quantity measured** | **MD direction** | **TD direction** |
|---|---|---|
| E (MPa) | 1610 ± 130 | 1290 ± 100 |
| σₛₙ (MPa) | 51 ± 4 | 32 ± 7 |
| εₛₙ (%) | 4.7 ± 0.4 | 4.0 ± 0.4 |
| σᵣₒₜ (MPa) | 32 ± 3 | 34 ± 8 |
| εᵣₒₜ (%) | 80 ± 9 | 150 ± 60 |
| Toughness (mJ/mm³) | 30 ± 8 | 46 ± 20 |

### Thermal properties

The thermal properties were evaluated by subjecting the test samples to a heating-cooling-heating thermal cycle.

The following table (Table 4) lists the thermal properties, in terms of glass transition temperature (Tg), melting temperature (Tm), melting enthalpy (ΔHm), and those structural in terms of crystallinity degree (Xc) of the film, obtained from different thermal scans.

**Table 4**

| | **Tg (°C)** | **Tm (°C)** | **ΔHm (J/g)** | **Xc (%)** | **Tc (°C)** | **ΔHc (J/g)** |
|---|---|---|---|---|---|---|
| First heating | 52.4 | 200.05 | 51.29 | 21.4 | / | / |
| Cooling | / | / | / | / | 154.10 | 41.66 |
| Second heating | 55.60 | 196.72 | 41.95 | 17.5 | / | / |

### Optical properties

Haze, transmittance and clarity are measured on the film of Example 1 according to standard ASTM D1003. The following values are obtained:
- haze (%): 0.90 ± 0.08;
- transmittance (%): 93.2 ± 0.1;
- clarity (%): 99.3 ± 0.4.

### Barrier properties

Permeability (P), diffusivity (D) and oxygen solubility (S) are measured on the film of Example 1 according to standard ASTM D1434. The following values are obtained:
P (cm³•cm/m²•24h•bar): 0.12;
D•10⁹ (cm²/s): 3.8;
S•10² (cm³/cm³ bar): 3.9.

### Rheological analysis

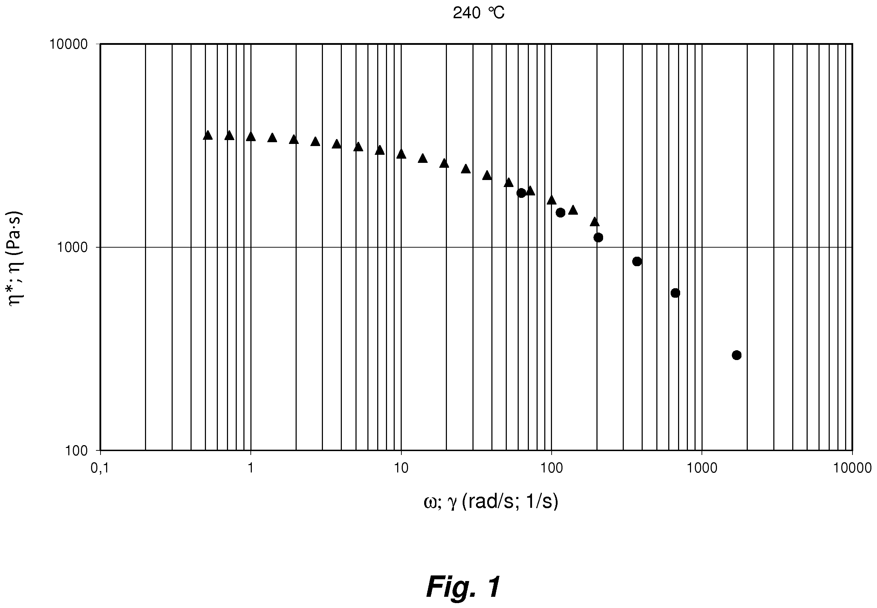

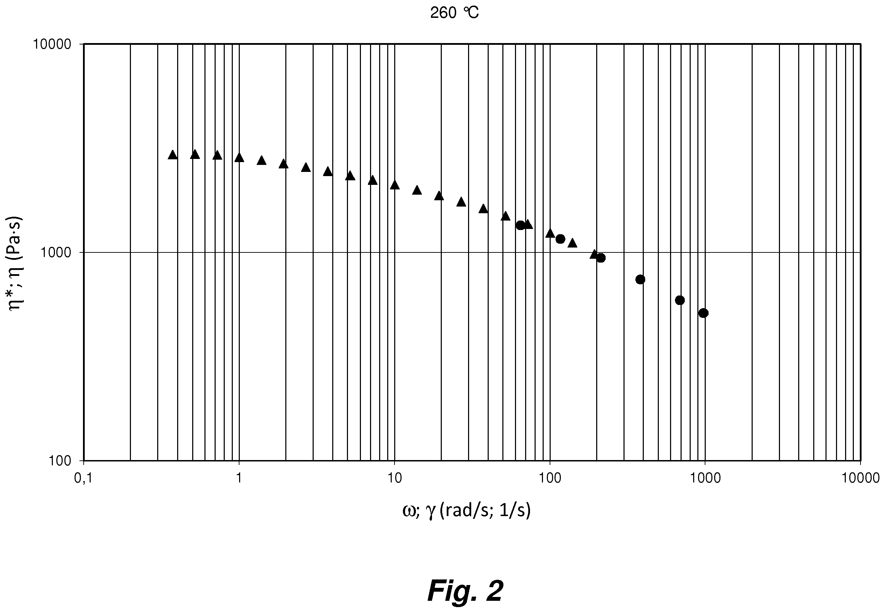

The film produced in Example 1 is conditioned, in preparation for the rheological tests, with a treatment of 48 hours at 23 °C and a relative humidity of 50%. The flow curves, obtained from the combination of the results obtained with rotational rheometer (η* vs ω) with those obtained with capillary rheometer (η vs γ), are shown in Figures 1 and 2 respectively for the test at 240 °C and for the test at 260 °C; in the graphs of the Figures, the points indicated with a triangle relate to measurements made with rotational rheometer, while those shown with a circle refer to measurements made with a capillary rheometer.

## Claims

1. Random copolyamide having high transparency, melting point reduced compared to the polyamide PA 6 and reduced gas permeability, obtained by polycondensation of:
- caprolactam in an amount between 65 and 92.5% by weight;
- salt of adipic acid and hexamethylene diamine in an amount comprised between 5 and 20% by weight; and
- salt of isophthalic acid and isophorone diamine in an amount comprised between 2 and 15% by weight.

2. Copolyamide according to claim 1, obtained by polycondensation of:
- 80.5% by weight of caprolactam;
- 14.5% by weight of salt of adipic acid and hexamethylene diamine;
- 5% by weight of salt of isophthalic acid and isophorone diamine.

3. Copolyamide according to any one of claims 1 or 2, having:
- melting point of about 200 °C;
- oxygen permeability, P, measured according to standard ASTM D1434, less than or equal to 0.12 cm³•cm/m²•24h•bar;
- value of transparency, measured as a transmittance percentage according to standard ASTM D1003, of approximately 93.1 ± 0.1.

4. Process for the preparation of the copolyamide of any one of claims 1 to 3, which comprises the steps of:
- preparing an aqueous solution of caprolactam operating under a stream of an inert gas;
- preparing separate aqueous solutions of salt of adipic acid and hexamethylene diamine, and of salt of isophthalic acid and isophorone diamine, operating either under an inert gas or in air and modifying the atmosphere to inert gas inside a transfer container or homogenizer where said solutions are loaded;
- feeding, one at a time, said aqueous solutions under inert gas into an autoclave containing an inert gas atmosphere;
- pressurizing the autoclave at a pressure of about 10 bar, by increasing the temperature of the mixture of said aqueous solutions to a value between 210-220 °C;
- increasing the temperature of said mixture up to about 225 °C, keeping the pressure at about 10.5 bar;
- decreasing the pressure in the autoclave to a value of about 1 bar, while maintaining the temperature to a value between 225 and 230 °C;
- further decreasing the pressure to a value below 0.4 bar and raising the temperature to a value higher than 230 °C;
- extracting from the autoclave the copolyamide thus produced.

5. Process according to claim 4, wherein the step of pressurizing the autoclave lasts between some tens of minutes and one hour.

6. Process according to any one of claims 4 or 5, wherein the step of increasing the temperature of the mixture up to about 225 °C lasts between about 15 and 30 minutes.

7. Process according to any one of claims 4 to 6, wherein the step of decreasing the pressure in the autoclave lasts between one hour and two hours.

8. Process according to any one of claims 4 to 7, wherein:
- said aqueous solution of caprolactam has a concentration of about 80% by weight and further contains phosphoric acid in an amount such that this acid constitutes about 0.011-0.012% by weight of the total mixture, and an antifoam agent in an amount such that this constitutes approximately 0.006% by weight of the total mixture;
- said aqueous solution of salt of adipic acid and hexamethylene diamine has a concentration of about 50% by weight and a pH between 7.4 and 7.7; and
- said aqueous solution of salt of isophthalic acid and isophorone diamine has a concentration of about 50% by weight and a pH between 6.8 and 7.2.

9. Process according to any one of claims 4 to 8, wherein the discharge of the copolyamide is performed by introducing an inert gas into the autoclave until reaching a pressure of between 3 and 4 bar.

## Patentansprüche

1. Random-Copolyamid mit hoher Transparenz und gegenüber Polyamid PA 6 reduziertem Schmelzpunkt sowie reduzierter Gasdurchlässigkeit, gewonnen durch Polykondensation von:
- Caprolactam in einer Menge zwischen 65 und 92,5 Gew.-%;
- Salz von Adipinsäure und Hexamethylendiamin in einer Menge zwischen 5 und 20 Gew.-%; und
- Salz von Isophtalsäure und Isophorondiamin in einer Menge zwischen 2 und 15 Gew.-%.

2. Copolyamid gemäß Anspruch 1, gewonnen durch Polykondensation von:
- 80,5 Gew.-% Caprolactam;
- 14,5 Gew.-% Salz von Adipinsäure und Hexamethylendiamin;
- 5 Gew.-% Salz von Isophtalsäure und Isophorondiamin.

3. Copolyamid gemäß einem der Ansprüche 1 oder 2 mit:
- einem Schmelzpunkt von etwa 200°C;
- einer Sauerstoffdurchlässigkeit P, kleiner oder gleich 0,12 cm³•cm/m²•24h•bar, gemessen gemäß Standard ASTM D 1434;
- einem Transparenzwert von etwa 93,1 +/- 0,1, gemessen als Transmissions-Rate gemäß Standard ASTM D 1003.

4. Verfahren zur Herstellung des Copolyamids gemäß Anspruch 1 bis 3, das folgende Schritte aufweist:
- Herstellung einer wässrigen Lösung von Caprolactam in einem inerten Gasstrom;
- Herstellung separater wässriger Lösungen eines Salzes von Adipinsäure und Hexamethylendiamin und eines Salzes von Isophtalsäure und Isophorondiamin, wobei entweder in einem inerten Gasstrom oder in Luft gearbeitet wird und die Atmosphäre innerhalb eines Transferbehälters oder Homogenisators, in den die Lösungen geleitet werden, zu inertem Gas gewandelt wird;
- Zuführen zu einem Zeitpunkt der wässrigen Lösungen unter inertem Gas zu einem Autoklaven, der eine inerte Gas-Atmosphäre enthält;
- Druckbeaufschlagung des Autoklaven mit einem Druck von etwa 10 bar bei Erhöhung der Temperatur der Mischung der wässrigen Lösungen bis zu einem Wert zwischen 210 und 220 °C;
- Erhöhung der Temperatur der Mischung bis etwa 225 °C unter Beibehaltung des Drucks bei etwa 10,5 bar;
- Reduzierung des Drucks im Autoklaven bis zu einem Wert von etwa 1 bar unter Beibehaltung der Temperatur bei einem Wert zwischen 225 und 230 °C;
- Weitere Reduzierung des Drucks bis zu einem Wert unter 0,4 bar und Erhöhung der Temperatur auf einen Wert über 230 °C;
- Extraktion des so hergestellten Copolyamids aus dem Autoklaven.

5. Verfahren gemäß Anspruch 4, wobei der Schritt der Druckbeaufschlagung des Autoklaven zwischen einigen zehn Minuten und einer Stunde dauert.

6. Verfahren gemäß einem der Ansprüche 4 oder 5, wobei der Schritt der Erhöhung der Temperatur der Mischung bis etwa 225 °C etwa 15 bis 30 Minuten dauert.

7. Verfahren gemäß einem der Ansprüche 4 bis 6, wobei der Schritt der Reduzierung des Drucks im Autoklaven zwischen einer und zwei Stunden dauert.

8. Verfahren gemäß einem der Ansprüche 4 bis 7, wobei:
- die wässrige Lösung von Caprolactam eine Konzentration von etwa 80 Gew.-% aufweist und des Weiteren Phosphorsäure in einer Menge von etwa 0,011 bis 0,012 Gew.-% an der Gesamtmischung enthält und ein Antischaummittel in einer Menge enthält, sodass dieses etwa 0,006 Gew.-% an der Gesamtmischung ausmacht;
- die wässrige Lösung des Salzes von Adipinsäure und Hexamethylendiamin eine Konzentration von etwa 50 Gew.-% und einen pH-Wert zwischen 7,4 und 7,7 aufweist; und
- die wässrige Lösung des Salzes von Isophtalsäure und Isophorondiamin eine Konzentration von etwa 50 Gew.-% und einen pH-Wert zwischen 6,8 und 7,2 aufweist.

9. Verfahren gemäß einem der Ansprüche 4 bis 8, wobei das Ablassen des Copolyamids durchgeführt wird, indem ein inertes Gas in den Autoklaven eingeleitet wird, bis ein Druck von 3 bis 4 bar erreicht ist.

## Revendications

1. Copolyamide statistique présentant une transparence élevée, un point de fusion réduit par rapport au polyamide PA 6 et une perméabilité réduite aux gaz, obtenu par la polycondensation :
- du caprolactame en une quantité entre 65 et 92,5 % en poids ;
- d'un sel de l'acide adipique et de l'hexaméthylène diamine en une quantité comprise entre 5 et 20 % en poids ; et
- d'un sel de l'acide isophtalique et de l'isophorone diamine en une quantité comprise entre 2 et 15 % en poids.

2. Copolyamide selon la revendication 1, obtenu par la polycondensation de :
- 80,5 % en poids de caprolactame ;
- 14,5 % en poids d'un sel de l'acide adipique et de l'hexaméthylène diamine ;
- 5 % en poids d'un sel de l'acide isophtalique et de l'isophorone diamine.

3. Copolyamide selon l'une quelconque des revendications 1 ou 2, présentant :
- un point de fusion d'environ 200 °C ;
- une perméabilité à l'oxygène, P, mesurée selon la norme ASTM D1434, inférieure ou égale à 0,12 cm³•cm/m²•24h•bar ;
- une valeur de transparence, mesurée sous la forme d'un pourcentage de facteur de transmission selon la norme ASTM D1003, d'approximativement 93,1 ± 0,1.

4. Procédé de préparation du copolyamide selon l'une quelconque des revendications 1 à 3, qui comprend les étapes suivantes :
- la préparation d'une solution aqueuse de caprolactame en opérant sous un courant de gaz inerte ;
- la préparation de solutions aqueuses séparées d'un sel de l'acide adipique et de l'hexaméthylène diamine, et d'un sel de l'acide isophtalique et de l'isophorone diamine, en opérant sous un gaz inerte ou à l'air et en modifiant l'atmosphère en gaz inerte à l'intérieur d'un récipient de transfert ou d'un homogénéisateur où lesdites solutions sont chargées ;
- l'introduction, une à la fois, desdites solutions aqueuses sous gaz inerte dans un autoclave contenant une atmosphère de gaz inerte ;
- la mise sous pression de l'autoclave à une pression d'environ 10 bar, en augmentant la température du mélange desdites solutions aqueuses jusqu'à une valeur située entre 210 et 220 °C ;
- l'augmentation de la température dudit mélange jusqu'à environ 225 °C, en maintenant la pression à environ 10,5 bar ;
- la diminution de la pression dans l'autoclave jusqu'à une valeur d'environ 1 bar, tout en maintenant la température à une valeur située entre 225 et 230 °C ;
- la diminution encore de la pression jusqu'à une valeur inférieure à 0,4 bar et l'augmentation de la température jusqu'à une valeur supérieure à 230 °C ;
- l'extraction à partir de l'autoclave du copolyamide ainsi produit.

5. Procédé selon la revendication 4, dans lequel l'étape de mise sous pression de l'autoclave dure entre quelques dizaines de minutes et une heure.

6. Procédé selon l'une quelconque des revendications 4 ou 5, dans lequel l'étape d'augmentation de la température du mélange jusqu'à environ 225 °C dure entre environ 15 et 30 minutes.

7. Procédé selon l'une quelconque des revendications 4 à 6, dans lequel l'étape de diminution de la pression dans l'autoclave dure entre une heure et deux heures.

8. Procédé selon l'une quelconque des revendications 4 à 7, dans lequel :
- ladite solution aqueuse de caprolactame a une concentration d'environ 80 % en poids et contient en outre de l'acide phosphorique en une quantité telle que cet acide constitue environ 0,011 à 0,012 % en poids du mélange total, et un agent antimousse en une quantité telle que celui-ci constitue approximativement 0,006 % en poids du mélange total ;
- ladite solution aqueuse d'un sel de l'acide adipique et de l'hexaméthylène diamine a une concentration d'environ 50 % en poids et un pH entre 7,4 et 7,7 ; et
- ladite solution aqueuse d'un sel de l'acide isophtalique et de l'isophorone diamine a une concentration d'environ 50 % en poids et un pH entre 6,8 et 7,2.

9. Procédé selon l'une quelconque des revendications 4 à 8, dans lequel le déchargement du copolyamide est réalisé par l'introduction d'un gaz inerte dans l'autoclave jusqu'à atteindre une pression située entre 3 et 4 bar.
